# EUROPEAN PATENT APPLICATION

(11) **EP 2 179 869 A1**
(43) Date of publication of application: **28.04.2010**
(21) Application number: 08842493.2
(22) Date of filing: 20.10.2008
(51) Int. Cl.: B60C 15/04, B60C 9/00

(54) **ANNULAR CONCENTRICALLY-TWISTED BEAD CORD, AND VEHICULAR TIRE USING THE BEAD CORD**

(30) Priority: 26.10.2007 JP 2007278897; 17.03.2008 JP 2008067469; 15.10.2008 JP 2008265935
(71) Applicant: Sumitomo (SEI) Steel Wire Corp., Itama-shi, Hyogo 664-0016 (JP); Sumitomo Electric Tochigi Co., Ltd., Utsunomiya-shi, Tochigi 321-3231 (JP)
(72) Inventor: WAKAHARA, Hitoshi, Utsunomiya-shi Tochigi 321-3231 (JP); OKAMOTO, Kenichi, Itami-shi Hyogo 664-0016 (JP)
(74) Representative: HOFFMANN EITLE
(86) International application number: PCT/JP2008/068969
(87) International publication number: WO 2009/054346

(57) **Abstract**

An annular core stranded bead wire having a reduced weight and offering ease in manufacturing and handling and a vehicle tire using such a bead wire are provided.

The annular core stranded bead wire 2 has a metal annular core 11 and a sheath layer 13 constituted of a side wire 12 wound in a spiral pattern around the annular core: the side wire 12 is prepared by wrapping a side wire main body 21 made of aramid fiber with a pair of steel wires 22.

## Description

### Technical Field

The present invention relates to an annular core stranded bead wire that is embedded into bead portions of a pneumatic tire and a vehicle tire using such a bead wire.

### Background Art

A bead wire that is embedded into bead portions of a pneumatic tire usually has a sheath layer prepared by winding a side wire around an annular core wire made of a soft steel wire, with the steel wire constituting the side wire being thinner than the core.
Known bead wires intended to have sufficient strength and a reduced weight include one having a plurality of layers prepared by stranding plated hard steel wires of the same diameter together (e.g., see Patent Document 1) and one prepared by winding a steel sheath wire in a spiral pattern around an annular core wire made of a synthetic resin (e.g., see Patent Document 2).

[Patent Document 1] Japanese Unexamined Patent Application Publication No. H5-163686
[Patent Document 2] Japanese Unexamined Patent Application Publication No. H11-321247

### Disclosure of Invention

### Problems to be Solved by the Invention

Incidentally, the bead wire disclosed in Patent Document 1 has a structure constituted of a plurality of layers configured by stranding hard steel wires of the same diameter and contains no annular core wires and thus is unstable in terms of shape and difficult to manufacture automatically. The only advantage is a reduced weight brought about by replacement of an annular core wire with a thin hard steel wire. Furthermore, such a hard steel wire would often turn into a hard and brittle quenched structure when both ends thereof are welded together to produce the annular core, thereby necessitating annealing to prevent breaking and deburring of the processed portions.

Also, the bead wire disclosed in Patent Document 2 contains an annular core wire made of a synthetic resin, and the annular core wire has low rigidity. The shape of this synthetic resin annular core wire is difficult to maintain, and facilities for winding sheath wires around the annular core wire to produce bead wires are difficult to establish. Furthermore, the obtained bead wires themselves are also poor in terms of rigidity and, accordingly, difficult to handle.

Under these circumstances, the present invention is intended to provide an annular core stranded bead wire that has a reduced weight and offers ease in manufacturing and handling and a vehicle tire using such a bead wire.

### Means for Solving the Problems

The annular core stranded bead wire according to the present invention, which can solve the problems described above, is an annular core stranded bead wire having a metal annular core and one or more sheath layers prepared by winding a side wire in a spiral pattern around the annular core, wherein the side wire is made of aramid fiber.

The use of aramid fiber, which is much lighter, stronger, and less ductile than hard steel wires, as the side wire wound around the annular core to prepare the sheath layer(s) allows to reduce the weight while maintaining some rigidity. This provides the resultant annular core stranded bead wire with ease in manufacturing and handling and a reduced weight.

The side wire is preferably dipped in advance in a resin adhesive to rubber. This ensures, for example, favorable adhesion of the annular core stranded bead wire to tire rubber when the bead wire is used to reinforce the bead portions of a rubber tire.

The side wire is preferably prepared by wrapping a side wire main body made of aramid fiber with steel wires making spirals in different directions. This allows the aramid fiber, which has low rigidity and excellent flexibility, to maintain a circular cross-sectional shape in spite of the instability of the cross-sectional shape with the help of the wrapping steel wires making spirals in different directions, to have adequate rigidity and adequate flexibility, and to become easier to handle.

The number of the steel wires wrapping the side wire while making spirals in different directions is preferably the same in all the directions. When the number of the wrapping steel wires is the same in all the directions, residual warping of the side wire is unlikely to occur, the side wire wound around the annular core is easily shaped into a desired pattern, and the resultant annular core stranded bead wire has an annular shape with no external influences (the annular shape forms a plane).

When the winding pitch of the side wire wound around the annular core is A and the wrapping pitch of the steel wires wrapping the aramid fiber side wire main body is B, the following relationship preferably stands: 0.12A ≥ B. This prevents breaking of the aramid fiber due to its insufficient rigidity and markedly reduces the frequency of nonuniform winding of the side wire around the annular core.

The diameter of each steel wire is preferably in the range of 0.13 to 0.25 mm. This prevents wire breaking due to friction and renders adequate rigidity and adequate flexibility to the aramid fiber. Note that a steel wire having a diameter greater than 0.25 mm would even exercise the wrapping effect described above, but form tall nodes (great partial protrusions in the radial direction of the side wire). These nodes erect great obstacles in winding the side wire around the annular core, thereby promoting reduction of ease in winding.

In addition, the side wire may be prepared by impregnating a portion of aramid fiber with a curing resin rather than by wrapping the aramid fiber with steel wires. Impregnation with a curing resin provides the side wire with rigidity and a circular cross-sectional shape; as a result, the side wire can be wound around the annular core with ease in handling and shaping into a desired pattern.

The annular core is preferably made of alloy steel containing carbon (C) at a content ratio in the range of 0.08 to 0.27 mass%, silicon (Si) at a content ratio in the range of 0.30 to 2.00 mass%, manganese (Mn) at a content ratio in the range of 0.50 to 2.00 mass%, and chromium (Cr) at a content ratio in the range of 0.20 to 2.00 mass%; at least one of aluminum (Al), niobium (Nb), titanium (Ti), and vanadium (V) at a content ratio in the range of 0.001 to 0.10 mass%; and iron (Fe) and unavoidable impurities as the balance. This prevents decrease in ductility at the welded ends of the annular core.

The vehicle tire according to the present invention has the above-described annular core stranded bead wire embedded therein.

With the annular core stranded bead wire that offers ease in manufacturing and handling and has a reduced weight, the resultant tire is very easy to manufacture and has a reduced weight.

### Advantages

The present invention provides an annular core stranded bead wire that offers ease in manufacturing and handling and has a reduced weight and a vehicle tire using such a bead wire.

### Brief Description of Drawings

[Figure 1] Figure 1 is a cross-sectional view of a vehicle tire.
[Figure 2] Figure 2(a) is an overall view of a bead wire, and Fig. 2(b) is a partial perspective view of the bead wire.
[Figure 3] Figure 3 is a cross-sectional view of a bead wire.
[Figure 4] Figure 4 is a side view of a side wire.
[Figure 5] Figure 5 is a cross-sectional view showing another example of the side wire.
[Figure 6] Figure 6 is a schematic diagram showing an apparatus for manufacturing annular core stranded bead wires, in which an annular core swings like a pendulum.
[Figure 7] Figure 7 is a schematic diagram showing the apparatus shown in Fig. 6 in pendular movement.

### Reference Numerals

1: vehicle tire; 2: annular core stranded bead wire; 11: annular core; 12, 12a, 12b: side wire; 13: sheath layer; 21: side wire main body; 22: steel wire; A: winding pitch around an annular core; B: wrapping pitch around a side wire main body

### Best Modes for Carrying Out the Invention

Hereinafter, embodiments of the annular core stranded bead wire according to the present invention and those of the vehicle tire using such a bead wire are described with reference to the drawings.

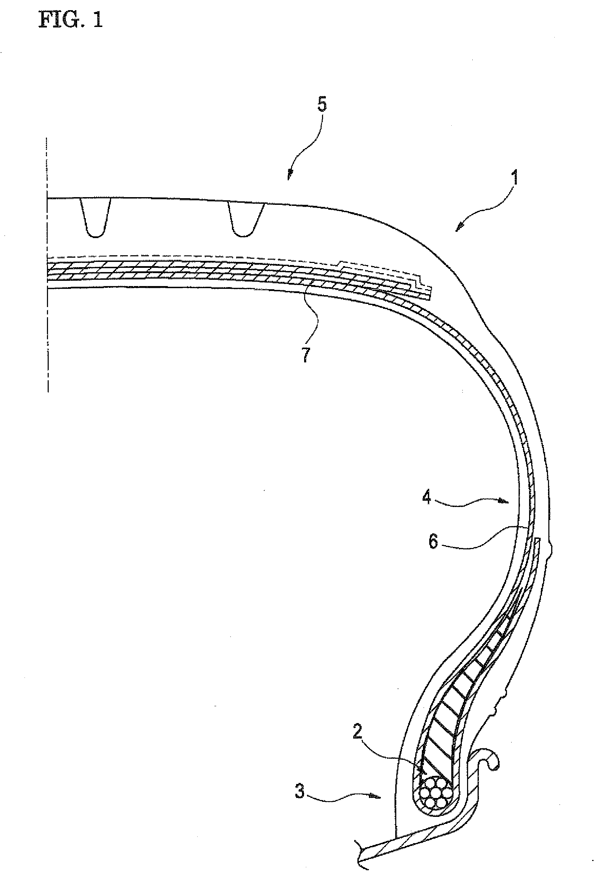

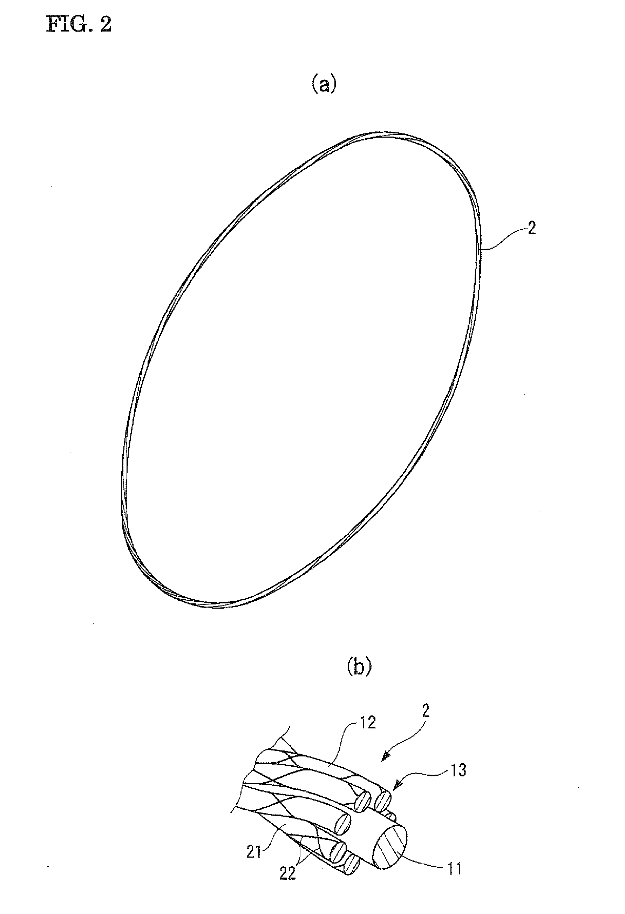

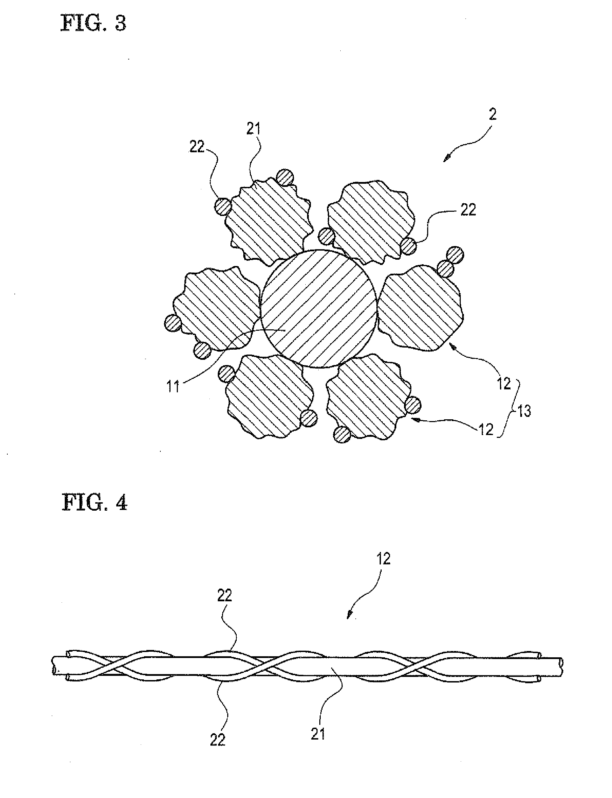

Figure 1 is a cross-sectional view of the vehicle tire, Fig. 2(a) is an overall view of the bead wire, Fig. 2(b) is a partial perspective view of the bead wire, Fig. 3 is a cross-sectional view of the bead wire, and Fig. 4 is a side view of a side wire.

As shown in Fig. 1, the vehicle tire I is a pneumatic tire for cars, having bead portions 3 located on both sides of the tire and containing bead wires 2, side walls 4 extending outward from the bead portions 3 in the radial direction of the tire, and a tread 5 bridging the gap between the upper ends of the side walls 4.
The bead portions 3 are linked together by a carcass 6, and a belt layer 7 is inserted between the carcass 6 and the tread 5 in parallel with the circumference of the tire.

The bead wires 2 passing through the bead portions 3 of the vehicle tire 1 described above each have, as shown in Figs. 2(a) and 2(b), and Fig. 3, an annular core 11 and a surrounding sheath layer 13 constituted of side wires 12 (in this embodiment, six side wires). This configuration is obtained by allowing a side wire 12 to go inside and outside the ring of the annular core 11 while being wound into a spiral pattern around the annular core 11 with a predetermined winding pitch A. Note that this embodiment illustrates the bead wire having a single sheath layer 13.

The annular core 11 is made of an alloy steel wire, and the material thereof is alloy steel containing carbon (C) at a content ratio in the range of 0.08 to 0.27 mass%, silicon (Si) at a content ratio in the range of 0.30 to 2.00 mass%, manganese (Mn) at a content ratio in the range of 0.50 to 2.00 mass%, and chromium (Cr) at a content ratio in the range of 0.20 to 2.00 mass%; at least one of aluminum (Al), niobium (Nb), titanium (Ti), and vanadium (V) at a content ratio in the range of 0.001 to 0.10 mass%; and iron (Fe) and unavoidable impurities as the balance.

As shown also in Fig. 4, the side wire 12 has a side wire main body 21 made of aramid fiber and a pair of ultra-thin steel wires 22 wrapped around the side wire main body 21 in a spiral manner in different directions.

The side wire main body 21 is produced by stranding a plurality of raw filaments made of aramid fiber (an aromatic polyamide fiber) in the left-hand direction (a single direction).
Examples of aramid fiber suitably used as the side wire main body 21 include one having a fineness of 1670 dtex (decitex), a tensile strength at breaking of 356 N, an initial modulus of elasticity of 461 cN/dtex, and an elongation at breaking of 3.70%.

To be adhesive to rubber composing the vehicle tire 1, the side wire main body 21 is subjected to a dipping treatment (resorcinol/formalin/latex treatment) after being stranded. This treatment provides the stranded aramid fiber filaments with adhesiveness to rubber so that they can be used as the side wire main body 21.

Configured in the way described above, the side wire main body 21 is wrapped by the first one of the steel wires 22. The wrapping direction, the right-hand direction (another direction), is opposite to the left-hand direction, in which the side wire main body is stranded. Then, the side wire main body wrapped by the first steel wire is wrapped by the second one of the steel wires 22, whose wrapping direction is opposite to that for the first steel wire, namely, parallel to the left-hand direction (a single direction). This wrapping treatment using the steel wires 22 prevents the aramid fiber filaments of the side wire main body 21 from reverting back to the pre-stranded state and unraveling. Note that the steel wires 22 may be curled by being passed through a path line composed of one or more pins so as to be given a pitch equivalent to the desired wrapping pitch. This prevents the steel wires 22 from being engaged in the soft side wire main body 21, thereby making the wrapping operation easy.

The number of the steel wires 22 wrapping the side wire main body so as to make spirals in different directions is the same in all the directions. Figures 3 and 4 show examples in which one of the steel wires 22 wraps the side wire main body in the leflt-hand direction and the other in the right-hand direction; however, in each of the directions, the number of the wrapping steel wires may be two or more. When the number of the wrapping steel wires is different depending on the direction, the following problems may arise: the steel wires 22 wrapping the side wire main body 21 may experience residual warping, thereby causing a risk of residual warping also to the soft side wire 12; as a result, the side wire 12 cannot be smoothly wound around the annular core 11, or the resultant annular core stranded bead wire 2 ends up with a cross-sectional structure deviating from intended one, namely, a planar cross section. However, when the number of the steel wires 22 wrapping the side wire main body so as to make spirals in different directions is the same in all the directions, such problems are avoided.

The steel wires 22 each have a diameter in the range of 0.13 to 0.25 mm. Also, when the winding pitch of the side wire 12 wound around the annular core 11 is A and the wrapping pitch of the steel wires 22 wrapping the side wire main body 21 is B, the following relationship stands: 0.12A ≥ B. The upper one of the steel wires 22 wrapping the side wire 21 has a slightly smaller wrapping pitch than the lower one. This allows the side wire 12 to have uniform internal stress.

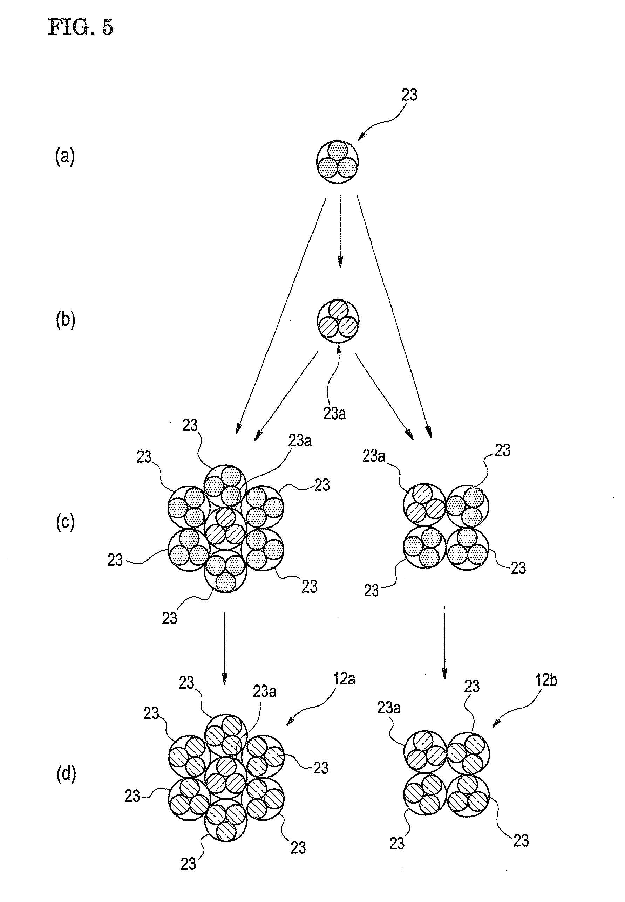

In another possible embodiment, the side wire main body 21 has no wrapping steel wires 22. For example, as shown in Fig. 5, a string of stranded aramid fiber filaments 23 (see Fig. 5(a)) is hardened using a curing resin (a phenol resin or an epoxy resin) to prepare a hardened string of stranded aramid fiber filaments 23a (see Fig. 5(b)), and then the hardened string is used as a core, and another string of stranded aramid fiber filaments 23 is wound therearound as the side wire (see Fig. 5(c)). The obtained structure is subjected to a dipping treatment (see Fig. 5(d)). This treatment provides the side wire with adhesiveness to rubber, turning it into the side wire 12a or 12b that has adequate rigidity. Note that Figs. 5(c) and 5(d) show an example in which six strings of stranded aramid fiber filaments 23 are stranded around the hardened string of stranded aramid fiber filaments 23a and another example having additional three strands. Even if it has no steel wires 22, such a rigid side wire main body 21 would maintain a circular cross-sectional shape, thereby offering more ease in handling and shaping into a desired pattern while being wound around the annular core. Note that, when no steel wires are used, the side wire preferably has a greater diameter to make up for the absence of the steel wires and preferably has a circular cross-sectional shape.

Hereinafter, a method for manufacturing the annular core stranded bead wire described above is explained.

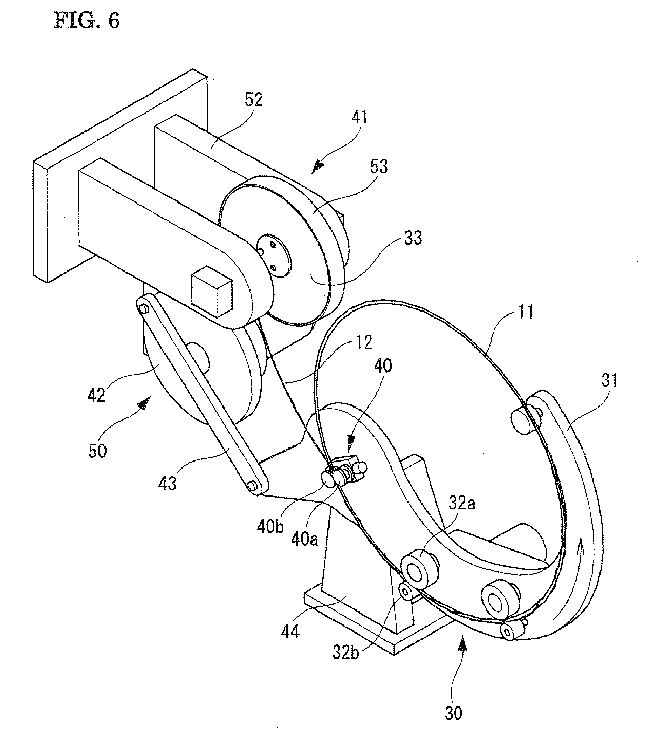

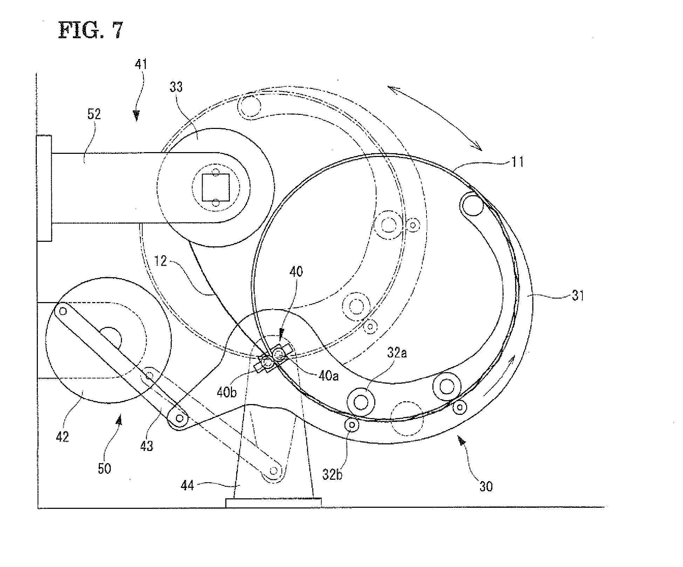

Figure 6 is a schematic diagram showing an apparatus for manufacturing annular core stranded bead wires, in which an annular core swings like a pendulum, and Fig. 7 is a schematic diagram showing the apparatus shown in Fig. 6 in pendular movement.

The manufacturing apparatus shown in Figs. 6 and 7 has a driving unit 30 that rotates an annular core 1 in the circumferential direction and a supplier 41 for a side wire 12 that supplies the side wire 12 wound around a reel 33 to a winder for the annular core 11.

The driving unit 30 has two pinch rollers 32a and 32b that are mounted on a bow-shaped holding arm 31, are connected to a driving motor, and rotate the annular core 11 in the circumferential direction.

The holding arm 31 has a clamp unit 40 at the side from which the side wire 12 is supplied. This clamp unit 40, having two rollers 40a and 40b, prevents the annular core from horizontally vibrating, stabilizes the rotation in the circumferential direction, and positions the point at which the side wire 12 is wound, thereby making the winding operation easier. Note that the annular core 11 shown in this example is in an upright position and thus can be rotated in the circumferential direction with reduced horizontal vibration.

The holding arm 31 is supported by the stand 44 so as to be allowed by a shaker 50 having a turntable 42 and a crankshaft 43 to swing like a pendulum around the clamp unit 40.

The annular core 11 held by the holding arm 31 swings in such a manner that the reel 33 is positioned away from the ring of the annular core 11 at a peak of the pendular movement cycle and enters the ring of the annular core 11 at the other peak of the pendular movement cycle.

The suppler 41 for the side wire 12 has a pair of front and rear cassette stands 52. The front one and the rear one are horizontally arranged, facing each other, with an interval therebetween large enough to allow the annular core 11 held by the holding arm 31 to swing freely. The distal end of each of the cassette stands 52 has a reel-delivering mechanism, and the two reel-delivering mechanisms face each other across the face of the annular core 11.

The supplier 41 has the reel 33, around which the side wire 12 is wound, and a cassette 53 that looks like a cylinder having a diameter slightly greater than the outer diameter of the reel 33 and a width equal to or greater than the inner width of the reel 33. Like a so-called cartridge, the reel 33 is rotatably stored in the cassette 53 in such a manner that the whole area of the surface thereof used to wind the side wire 12 is covered.

In manufacture of a bead wire using an apparatus configured as above, the leading end of the side wire 12 is first temporarily fixed to the annular core 11 on the holding arm 31 using an unvulcanized rubber sheet made of the same material as rubber for a vehicle tire 1.
Then, the reel 33 of the supplier 41 reciprocates across the core plane, namely, a plane having the annular core 11, at predetermined positions and, at the same time, the annular core 11 is allowed to swing like a pendulum around the clamp unit 40, which serves as the point at which the side wire 12 is wound.

As a result, the side wire 12 fed by the reel 33 is wound around the annular core 11 in a spiral pattern, with the distance from the reel 33 to the point at which the side wire 12 is wound kept almost constant, the tension kept constant, and no loosening occurring.
The side wire 12 is repeatedly wound to reach the predetermined ply count, and then the leading end, which has been temporarily fixed to the annular core 11, is released and glued to the trailing end.

In this way, a bead wire 2 having the annular core 11 and a surrounding sheath layer 13 constituted of the side wire 12 wound in a spiral pattern.
Note that means for connecting the leading end and the trailing end together may be a sleeve made of brass, a light material (e.g., plastics or fluorocarbon polymers), or the like.

As described above, in the annular core stranded bead wire according to this embodiment, the side wire 12 wound around the annular core 11 to constitute the sheath layer 13 is made of aramid fiber that is much lighter, stronger, and less ductile than steel wires and thus allows the weight to be reduced while maintaining some rigidity.
Therefore, the annular core stranded bead wire 2 has a reduced weight as well as offering ease in manufacturing and handling.

Furthermore, the vehicle tire using such an annular core stranded bead wire incorporates an annular core stranded bead wire having a reduced weight and offering ease in manufacturing and handling, thereby serving as a tire 1 that can be manufactured easily and has a reduced weight.

Incidentally, the side wire main body 21, made of aramid fiber and contained in the side wire 12, is dipped in advance in a resin adhesive to rubber. When the bead wire 2 is used to reinforce the bead portions 3 of a rubber tire 1, this treatment would improve adhesion of the bead wire 2 to the rubber composing the tire 1.

Also, the side wire main body 21, made of aramid fiber and contained in the side wire 12, is wrapped by steel wires 22 so as to make spirals in different directions. This allows the aramid fiber, which has low rigidity and excellent flexibility, to maintain a circular cross-sectional shape in spite of the instability of the cross-sectional shape with the help of the wrapping steel wires 22 making spirals in different directions, to have adequate rigidity and adequate flexibility, and to become easier to handle.

When the winding pitch of the side wire 12, wound around the annular core 11 is A and the wrapping pitch of the steel wires 22 wrapping the aramid fiber side wire main body 21 is B, the following relationship stands: 0.12A ≥ B. This prevents breaking of the side wire 12 due to insufficient rigidity and markedly reduces the frequency of nonuniform winding of the side wire 12 around the annular core 11.

The diameter of each of the steel wires 22 is in the range of 0.13 to 0.25 mm. This prevents wire breaking due to friction and renders adequate rigidity and flexibility to the aramid fiber side wire main body 21.

The annular core 11 is made of alloy steel containing carbon (C) at a content ratio in the range of 0.08 to 0.27 mass%, silicon (Si) at a content ratio in the range of 0.30 to 2.00 mass%, manganese (Mn) at a content ratio in the range of 0.50 to 2.00 mass%, and chromium (Cr) at a content ratio in the range of 0.20 to 2.00 mass%; at least one of aluminum (Al), niobium (Nb), titanium (Ti), and vanadium (V) at a content ratio in the range of 0.001 to 0.10 mass%; and iron (Fe) and unavoidable impurities as the balance. This prevents the annular core 11 from losing ductility at both ends thereof at the time the ends are welded together.
Note that the annular core 11 described in this embodiment is surrounded by a single sheath layer 13; however, the number of the sheath layer 13 may be two or more.

### EXAMPLES

Bead wires were actually manufactured under different conditions and then evaluated in terms of ease in winding the side wire and the percentage of weight reduction in the final product.
The structure of the bead wires was as follows:
Structure of strands: Annular core × 1 + Side wire × 6
Pitch circle of the annular core: 436.6 mm
Ply count of winding the side wire: 13 turns/round (winding pitch: 105 mm)

The materials of the components used in the examples were as follows:
(Comparative Example 1)
   Annular core: A steel wire (medium-carbon steel: carbon (C) was contained at a content ratio of 0.52 mass%)
   Side wire: A steel wire (a hard steel wire: carbon (C) was contained at a content ratio of 0.82 mass%)
(Comparative Example 2)
   Annular core: Aramid fiber (aramid fiber filaments having a fineness of 1670 dtex were stranded and then solidified using an epoxy resin)
   Side wire: A steel wire (a hard steel wire: carbon (C) was contained at a content ratio of 0.82 mass%)
(Examples 1 to 10)
   Annular core: A steel wire (medium-carbon steel: carbon (C) was contained at a content ratio of 0.52 mass%)
   Side wire: Aramid fiber (aramid fiber filaments having a fineness of 1670 dtex were stranded and then dipped in a resin adhesive to rubber)
   Aramid fiber having the trade name Kevlar^{®} was used.

The results are shown in the table below.

**[Table]**

| | Material of components of the bead wire | | Size of components of the bead wire (φ mm) | | | Wrapping pitch of both B (mm) | Pitch ratio B/A | Ease in winding the side wire | Weight reduction (%) |
|---|---|---|---|---|---|---|---|---|---|
| | Annular core | Side wire | Annular core | Side wire | Wrapping wires | | | | |
| Comparative Example 1 | Steel wire | Steel wire | 1.5 | 1.4 | Not applicable | - | - | ⊚ | 0 |
| Comparative Example 2 | Kevlar + Resin | Steel wire | 1.5 | 1.4 | Not applicable | - | - | × | 11 |
| Example 1 | Steel wire | Kevlar | 1.5 | 1.1 | 0.15 | 20.0 | 0.190 | △ | 70 |
| Example 2 | Steel wire | Kevlar | 1.5 | 1.1 | 0.15 | 14.0 | 0.133 | △ | 70 |
| Example 3 | Steel wire | Kevlar | 1.5 | 1.1 | 0.15 | 12.0 | 0.114 | ○ | 70 |
| Example 4 | Steel wire | Kevlar | 1.5 | 1.1 | 0.15 | 10.0 | 0.095 | ○ | 70 |
| Example 5 | Steel wire | Kevlar | 1.5 | 1.1 | 0.15 | 5.0 | 0.048 | ⊚ | 70 |
| Example 6 | Steel wire | Kevlar | 1.5 | 1.1 | 0.15 | 3.5 | 0.033 | ⊚ | 70 |
| Example 7 | Steel wire | Kevlar | 1.9 | 1.4 | 0.15 | 10.0 | 0.095 | ○ | 51 |
| Example 8 | Steel wire | Kevlar | 1.9 | 1.4 | 0.15 | 3.5 | 0.033 | ⊚ | 51 |
| Example 9 | Steel wire | Kevlar | 2.0 | 1.4 | 0.20 | 10.0 | 0.095 | ○ | 51 |
| Example 10 | Steel wire | Kevlar | 2.0 | 1.4 | 0.20 | 5.0 | 0.048 | ⊚ | 51 |

The evaluation items listed in the table were evaluated in the following way.
(1) Ease in winding the side wire
   Uniformity of the side wire wound around the annular core was visually inspected. The number of test samples n was 20.
   ⊚: Uniformity is shown in all of 20 samples.
   ○: Uniformity is shown in 18 or more samples.
   △: The number of samples showing uniformity is in the range of 10 to 17.
   ×: Uniformity is shown in nine or less samples.
(2) Percentage of weight reduction
   Comparative Example 1, in which steel wires were used as the annular core and side wire, was used as the basis.
   As seen in the table, Comparative Example 2, in which aramid fiber was used as the annular core and a steel wire was used as the side wire, was better in terms of weight reduction than Comparative Example 1, in which steel wires were used as both the annular core and side wire, but was poor in terms of ease in winding the side wire.
   On the contrary, Examples 1 to 10, in which a steel wire was used as the annular core and aramid fiber was used as the side wire, were much better in terms of weight reduction than Comparative Example 1, in which steel wires were used as both the annular core and side wire, and offered some ease in winding the side wire. In particular, Examples 3 to 10, which satisfied the relationship 0.12A ≥ B where A represents the winding pitch of the side wire 12 and B represents the wrapping pitch of the steel wires 22, offered adequate ease in winding the side wire.
   Although the present invention has been described in detail with reference to specific embodiments thereof, it is apparent to those skilled in the art that various variations and modifications can be made without departing from the spirit and scope of the present invention. The present application is based on Japanese Patent Application No. 2007-278897 filed on October 26, 2007, Japanese Patent Application No. 2008-067469 filed on March 17, 2008, and Japanese Patent Application No. 2008-265935 filed on October 15, 2008, and the content of these applications is hereby incorporated by reference.

## Claims

1. An annular core stranded bead wire comprising a metal annular core and one or more surrounding sheath layers each constituted of a side wire wound in a spiral pattern around the annular core, wherein the side wire is made of aramid fiber.

2. The annular core stranded bead wire according to Claim 1, wherein the aramid fiber composing the side wire is dipped in advance in a resin adhesive to rubber.

3. The annular core stranded bead wire according to Claim 1 or 2, wherein the side wire is prepared by wrapping a side wire main body composed of the aramid fiber with a plurality of steel wires so as to make spirals in different directions.

4. The annular core stranded bead wire according to Claim 3, wherein the number of the steel wires wrapping the side wire main body so as to make spirals in different directions is the same in all the directions.

5. The annular core stranded bead wire according to Claim 3 or 4, wherein the relationship 0.12A ≥ B stands when the winding pitch of the side wire wound around the annular core is A and the wrapping pitch of the steel wires wrapping the aramid fiber side wire main body is B.

6. The annular core stranded bead wire according to any one of Claims 3 to 5, wherein the diameter of each of the steel wires is in the range of 0.13 to 0.25 mm.

7. The annular core stranded bead wire according to Claim 1, wherein the side wire is prepared by impregnating a portion of the aramid fiber filament with a curing resin.

8. The annular core stranded bead wire according to any one of Claims 1 to 7, wherein the annular core is made of alloy steel containing carbon (C) at a content ratio in the range of 0.08 to 0.27 mass%, silicon (Si) at a content ratio in the range of 0.30 to 2.00 mass%, manganese (Mn) at a content ratio in the range of 0.50 to 2.00 mass%, and chromium (Cr) at a content ratio in the range of 0.20 to 2.00 mass%; at least one of aluminum (Al), niobium (Nb), titanium (Ti), and vanadium (V) at a content ratio in the range of 0.001 to 0.10 mass%; and iron (Fe) and unavoidable impurities as the balance.

9. A vehicle tire having the annular core stranded bead wire according to any one of Claims 1 to 8 embedded therein.
